# EUROPÄISCHE PATENTANMELDUNG

(11) **EP 1 662 154 A1**
(43) Veröffentlichungstag der Anmeldung: **31.05.2006**
(21) Anmeldenummer: 05110557.5
(22) Anmeldetag: 09.11.2005
(51) Int. Cl.: F16B 5/02, B66B 9/00, B66B 21/00, B66B 23/02

(54) **Schraubenverbindung zum Verbinden von Bauteilen**

(30) Priorität: 17.11.2004 EP 04405709
(71) Anmelder: INVENTIO AG, CH-6052 Hergiswil (CH)
(72) Erfinder: Schütz, Richard, 1100, Wien (AT); Trojek, Günter, 2440, Moosbrunn (AT)
(74) Vertreter: Gaussmann, Andreas

(57) **Zusammenfassung**

Diese Schraubenverbindung (1) verbindet einen ersten Winkel (3) mit einem zweiten Winkel (4) einer Pinseleinheit (2). Der erste Winkel (3) ist an einem Trägerelement des Fahrtreppenkopfes bzw. Fahrsteigkopfes angeordnet. Ein zwischen den Winkeln (3,4) angeordneter Adapter (5) ermöglicht ohne Hilfsmittel eine präzise, zweidimensionale Positionsänderung der Pinseleinheit (2) gegenüber dem ersten Winkel (3) bzw. gegenüber seiner Ausgangsposition. Eine Schraube (6) mit Mutter (7) und Unterlagscheibe (7.1) hält die beiden Winkel (3,4) und den Adapter (5) zusammen.

## Beschreibung

Die Erfindung betrifft eine Schraubenverbindung zum Verbinden von Bauteilen.

Mittels Schraubenverbindungen verbundene Bauteile werden üblicherweise mittels mindestens zwei Schrauben miteinander verbunden, die an den Bauteilen angeordnete Löcher durchdringen. Zum Ausrichten der Bauteile sind die Löcher als Langlöcher ausgebildet, wobei je Langloch eine Positionsänderung in einer Dimension möglich ist.

Nachteilig bei dieser Schraubenverbindung ist der grosse Aufwand an Material und Arbeit zum Befestigen der Bauteile. Der Aufwand ist umso mehr von Bedeutung je mehr Verbindungen herzustellen sind.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine einfach herzustellende Schraubenverbindung vorzuschlagen.

Vorteilhafte Weiterbildungen der Erfindung sind in den abhängigen Patentansprüchen angegeben.

Die durch die Erfindung erreichten Vorteile sind im wesentlichen darin zu sehen, dass die erfindungsgemässe Schraubenverbindung ohne Hilfsmittel eine präzise, zweidimensionale Positionsänderung ermöglicht. Montage, Justierung und Lösen der Schraubenverbindung kann einfach, genau und schnell ausgeführt werden. Ausserdem ist der Aufwand an Schraubenmaterial wie Schrauben, Muttern, Unterlagsscheiben wesentlich geringer. Mit der nicht verdrehbaren Flachrundschraube ist eine Einhandmontage und ein exaktes Positionieren des zu verbindenden Bauteils mit der freien Hand möglich. Die Schraubenverbindung hat gegenüber den üblichen Verbindungen mit zwei oder drei Schrauben den Vorteil, dass das Lösen der Verbindung zeitsparender, einfacher und schneller vorgenommen werden kann.

Anhand der beiliegenden Figuren wird die vorliegende Erfindung näher erläutert.

Es zeigen:
Fig. 1
   einen Aufriss einer erfindungsgemässe Schraubenverbindung,
Fig. 2
   einen Grundriss der erfindungsgemässen Schraubenverbindung,
Fig. 3
   einen Seitenriss der erfindungsgemässen Schraubenverbindung,
Fig. 4
   einen Aufriss eines Adapters der erfindungsgemässen Schraubenverbindung,
Fig. 5
   einen Grundriss des Adapters der erfindungsgemässen Schraubenverbindung,
Fig. 6
   einen Seitenriss des Adapters der erfindungsgemässen Schraubenverbindung,
Fig. 7
   eine dreidimensionale Ansicht des Adapters der erfindungsgemässen Schraubenverbindung und
Fig. 8
   eine dreidimensionale Explosionsdarstellung der erfindungsgemässen Schraubenverbindung.

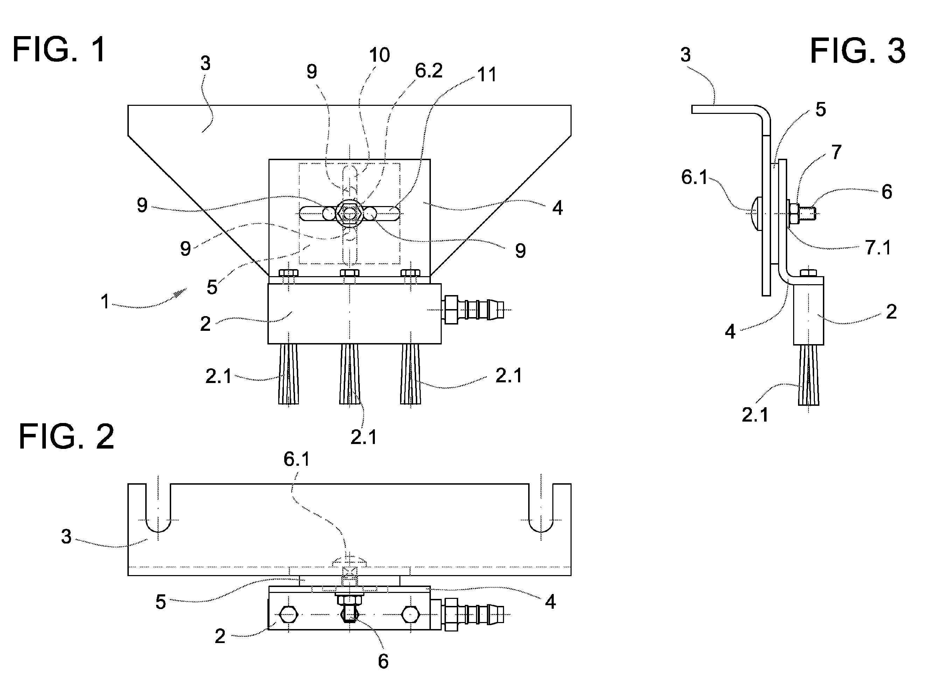

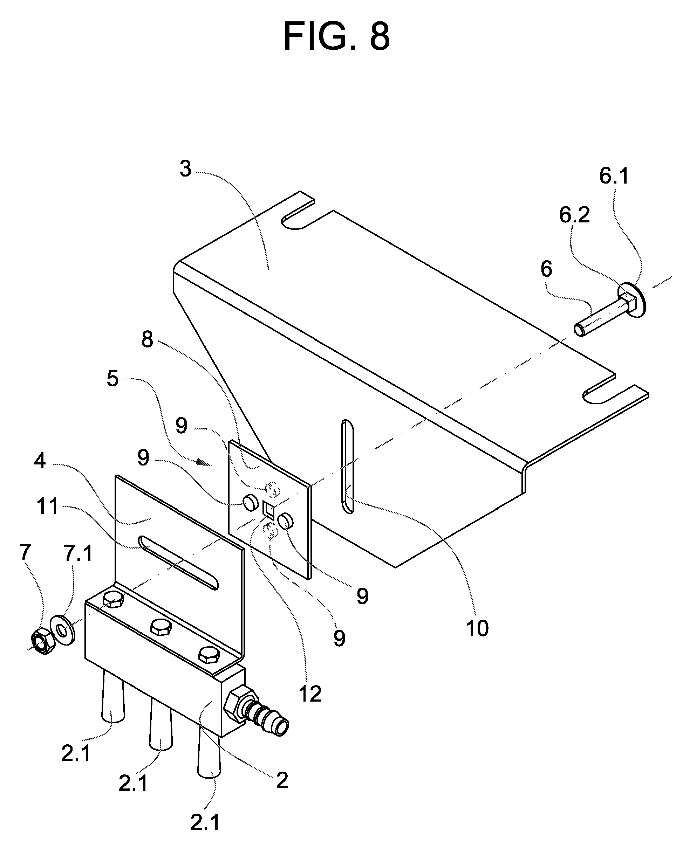

Fig. 1 bis 3 und Fig. 8 zeigen eine erfindungsgemässe Schraubenverbindung 1 zum Verbinden beispielsweise einer Pinseleinheit 2 mit einem ersten Winkel 3 einer nicht dargestellten Stufenketten-Schmiereinheit einer Fahrtreppe.

Bei einer Fahrtreppe bzw. einem Fahrsteig beispielsweise mit Glasbalustrade wird im oberen Treppenkopf eine Stufenketten-Schmiereinheit mit Pinseleinheit 2 oder Palettenketten-Schmiereinheit mit Pinseleinheit 2 eingebaut. Die Stufenketten-Schmiereinheit bzw. Pinseleinheit 2 ist zum Schmieren der Stufenkette bzw. Palettenkette vorgesehen. Die Stufenkette bzw.

Palettenkette verbindet das Stufenband bzw. Palettenband, das die Passagiere der Fahrtreppe oder des Fahrsteiges nach oben bzw. nach unten befördert. Für ein Stufenband bzw. Palettenband ist je Seite eine Stufenkette bzw. Palettenkette notwendig. Diese Stufenketten bzw. Palettenketten unterliegen starken Belastungen und müssen deswegen mittels Pinseln 2.1 mit Kettenöl geschmiert werden.

Die Pinseleinheit 2 ist an einem zweiten Bauteil, beispielsweise ein zweiter Winkel 4 angeordnet. Die erfindungsgemässe Schraubenverbindung 1 verbindet ein erstes Bauteil, beispielsweise einen ersten Winkel 3 mit dem zweiten Bauteil bzw. mit dem zweiten Winkel 4. Der erste Winkel 3 ist beipielsweise an einem Trägerelement des Fahrtreppenkopfes bzw. Fahrsteigkopfes angeordnet. Ein zwischen den Winkeln 3,4 angeordneter Adapter 5 ermöglicht ohne Hilfsmittel eine präzise, zweidimensionale Positionsänderung der Pinseleinheit 2 gegenüber dem ersten Winkel 3 bzw. gegenüber seiner Ausgangsposition. Eine Schraube 6 mit Mutter 7 bzw. Flügelmutter und Unterlagscheibe 7.1 hält die beiden Winkel 3,4 und den Adapter 5 zusammen.

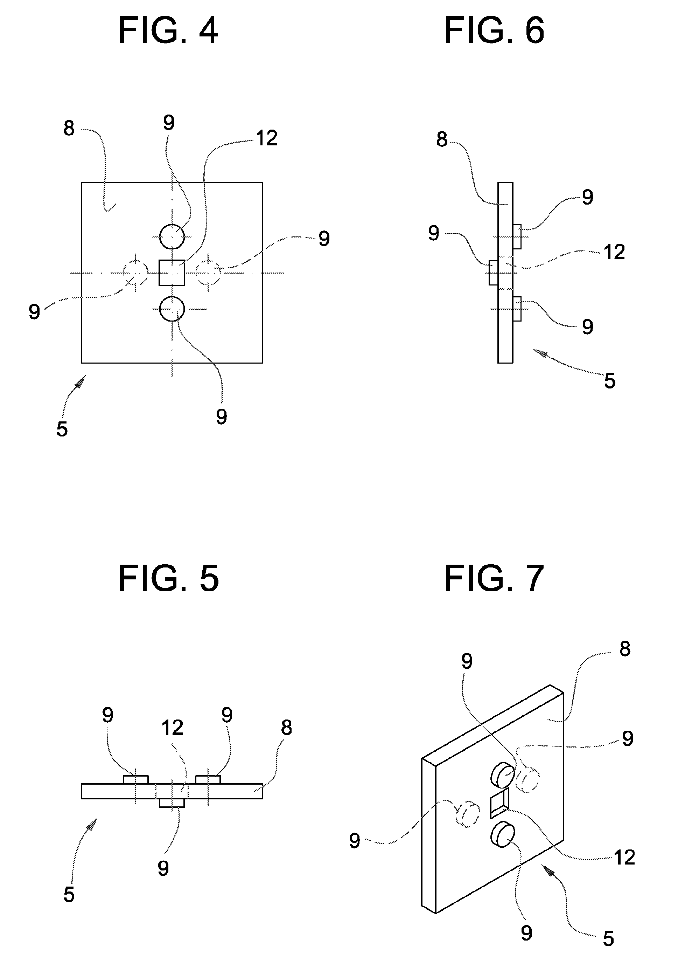

Fig. 4 bis 7 zeigen Einzelheiten des Adapters 5, der als Platte 8 mit Noppen 9 ausgebildet ist. Der Adapter 5 ist als Verbindungsbauteil zwischen den Winkeln 3,4 vorgesehen und stellt eine Führungsverbindung zwischen den winkeln 3,4 her. Die Platte 8 weist auf der Vorderseite wie auch auf der Rückseite mindestens je zwei als Noppen 9 ausgebildete Vorsprünge bzw. Erhebungen bzw. Ausprägungen auf. Die Noppen 9 sind beispielsweise aus der Platte 8 geprägt bzw. getrieben. Die Noppen können beispielsweise auch als Bolzen oder als Stifte oder als Hülsen oder als Rohre ausgebildet sein.

Die Noppen 9 der Rückseite der Platte 8 ragen in ein erstes, am ersten Winkel 3 angeordnetes Langloch 10. Die Noppen 9 der Vorderseite der Platte 8 ragen in ein zweites, am zweiten Winkel 4 angeordnetes Langloch 11. Die Achse der beiden Noppen 9 der einen Plattenseite ist rechtwinklig zur Achse der beiden Noppen 9 der anderen Plattenseite angeordnet. Die Langlöcher 10,11 sind in der Plattenebene gesehen rechtwinklig zueinander angeordnet. Die in den Langlöchern 10,11 geführten Noppen 9 ermöglichen ohne Hilfsmittel eine präzise, zweidimensionale Positionsänderung der Pinseleinheit 2 gegenüber dem ersten Winkel 3 bzw. gegenüber der Ausgangsposition.

Im Diagonalenschnittpunkt der Platte 8 (Mitte der Platte 8) ist ein Vierkantloch 12 vorgesehen. Der Schraubenkopf 6.1 ist flachrund ausgebildet. Ein Vierkantansatz 6.2 der Schraube 6 passt gleitend in das erste Langloch 10 des ersten Winkels 3 und ragt bis in das Vierkantloch 12 der Platte 8. Beim Festziehen der Mutter 7 kann sich die Schraube 6 nicht verdrehen. Mit der nicht verdrehbaren Flachrundschraube 6 ist eine Einhandmontage und ein exaktes Positionieren der Pinseleinheit 2 mit der freien Hand möglich. Die Schraubenverbindung 1 hat gegenüber den üblichen Verbindungen mit zwei oder drei Schrauben den Vorteil, dass das Lösen der Verbindung zeitsparender, einfacher und schneller vorgenommen werden kann.

Die erfindungsgemässe Schraubenverbindung 1 ist auch bei den Laufschienen bzw. Führungsschienen sowie bei den Fachwerkspanten und bei den Balustradenstehern oder bei der Kammplattenbefestigung oder bei der Balustrade als auch bei allen anderen Winkelverbindungen der Fahrtreppe bzw. des Fahrsteiges verwendbar.

Die erfindungsgemässe Schraubenverbindung kann auch in anderen Einrichtungen (beispielsweise Aufzüge, Seilbahnen oder Einrichtungen der Fördertechnik oder des Maschienenbaus) als Fahrtreppen oder Fahrsteigen zur Verbindung von Bauteilen verwendet werden.

## Patentansprüche

1. Schraubenverbindung (1) zum Verbinden von Bauteilen (3,4)
**dadurch gekennzeichnet,**
**dass** die Schraubenverbindung (1) einen Adapter (5) aufweist, der eine Führungsverbindung zwischen einem ersten Bauteil (3) und einem zweitem Bauteil (4) herstellt.

2. Schraubenverbindung nach Anspruch 1,
**dadurch gekennzeichnet,**
**dass** der Adapter (5) zwischen dem ersten Bauteil (3) und dem zweiten Bauteil (4) angeordnet ist.

3. Schraubenverbindung nach einem der Ansprüche 1 oder 2,
**dadurch gekennzeichnet,**
**dass** der Adapter (5) eine Platte (8) aufweist, die auf der einen Seite Vorsprünge (9) bzw. Erhebungen (9) aufweist, die in ein am ersten Bauteil (3) angeordnetes Langloch (10) ragen und
**dass** die Platte (8) auf der anderen Seite Vorsprünge (9) bzw. Erhebungen (9) aufweist, die in ein am zweiten Bauteil (4) angeordnetes Langloch (11) ragen.

4. Schraubenverbindung nach einem der Ansprüche 1 bis 3,
**dadurch gekennzeichnet,**
**dass** eine Schraube (6) vorgesehen ist, die die Bauteile (3,4) und die Platte (8) durchdringt und zusammen mit einer auf das eine Schraubenende aufsetzbaren Mutter (7) die Bauteile (3,4) und die Platte (8) lösbar verbindet.

5. Schraubenverbindung nach einem der vorhergehenden Ansprüche,
**dadurch gekennzeichnet,**
**dass** die Schraube (6) am anderen Ende einen Vierkantansatz (6.2) aufweist, der gleitend in das Langloch (10) des ersten Winkels (3) passt und bis in ein Vierkantloch (12) der Platte (8) ragt.

6. Schraubenverbindung (1) nach einem der Ansprüche 1 bis 5 zum Verbinden einer Pinseleinheit (2) mit einem Bauteil (3,4).

7. Fahrtreppe oder Fahrsteig mit mindestens einer Schraubenverbindung (1) nach einem der Ansprüche 1 bis 5.

8. Aufzug mit mindestens einer Schraubenverbindung (1) nach einem der Ansprüche 1 bis 5.

9. Verwendung der Schraubenverbindung nach einem der Ansprüche 1 bis 5 zum Verbinden von Bauteilen einer Fahrtreppe bzw. eines Fahrsteiges.

10. Verwendung der Schraubenverbindung nach einem der Ansprüche 1 bis 5 zum Verbinden von Bauteilen von Aufzügen, Seilbahnen oder von Einrichtungen der Fördertechnik oder des Maschienenbaus.
